# EUROPEAN PATENT SPECIFICATION

(11) **EP 3 647 818 B1**
(45) Date of publication and mention of the grant of the patent: **20.03.2024**
(21) Application number: 18822651.8
(22) Date of filing: 29.05.2018
(51) Int. Cl.: G01S 15/96, G01S 7/62, G01S 15/89, G01S 7/539, G06T 7/11, G06T 7/187

(54) **FISH SCHOOL FINDING DEVICE, FISH LENGTH MEASURING DEVICE, FISH SCHOOL FINDING METHOD, AND FISH SCHOOL FINDING PROGRAM**
FISCHSCHWARMAUFFINDUNGSVORRICHTUNG, FISCHLÄNGENMESSVORRICHTUNG, FISCHSCHWARMAUFFINDUNGSVERFAHREN UND FISCHSCHWARMAUFFINDUNGSPROGRAMM
DISPOSITIF DE RECHERCHE DE BANCS DE POISSONS, DISPOSITIF DE MESURE DE LONGUEURS DE POISSONS, PROCÉDÉ DE RECHERCHE DE BANCS DE POISSONS ET PROGRAMME DE RECHERCHE DE BANCS DE POISSONS

(30) Priority: 30.06.2017 JP 2017128305
(43) Date of publication of application: 06.05.2020
(73) Proprietor: Furuno Electric Co., Ltd., Nishinomiya-City, Hyogo 662-8580 (JP)
(72) Inventor: HAZAMA, Takuto, Nishinomiya-City Hyogo 662-8580 (JP); ONISHI, Yuriko, Nishinomiya-City Hyogo 662-8580 (JP); MATSUMURA, Takashi, Nishinomiya-City Hyogo 662-8580 (JP); TANIMURA, Shinya, Nishinomiya-City Hyogo 662-8580 (JP)
(74) Representative: CSY London
(86) International application number: PCT/JP2018/020514
(87) International publication number: WO 2019/003759

(56) References cited:
- EP-A2- 2 410 349
- JP-A- 2005 249 398
- JP-A- 2010 164 384
- JP-A- 2012 026 855
- JP-A- 2014 077 701
- JP-A- 2016 205 933
- JP-A- 2017 072 590
- JP-U- S6 378 285
- US-A1- 2016 306 033

## Description

The present invention relates to a fish school finding device, a fish length measuring device, a fish school finding method, and a fish school finding program, for transmitting an ultrasonic wave into water and detect an object like fish school from the echo signal.

Conventionally, there has been disclosed a fish school finding device for transmitting ultrasonic waves into water and detecting fish school from an echo signal of the ultrasonic waves. As one type of such a fish school finding device, for example, as shown in JP 2014-077701 A, there is a fish school finding device that extracts fish school with high accuracy by binarizing data generated based on an echo signal with reference to a signal level.

Now, in order to protect fishery resources worldwide, annual fish catches are agreed for each fish species, each country, and each ship. For example, in TAC (Total Allowable Catch), annual fish catches for each country are determined for each fish species. On the other hand, in the IVQ (Individual Vessel Quota), the annual catch is determined for each fish species and for each fishing vessel. In the case where the catch exceeds the determined catch amount, various penalties are imposed, such as a reduction in the catch amount in the next year.

Therefore, it is desirable that each fishing vessel can surely catch only fish of a target fish species or fish length.
EP 2410349 A2 discloses an underwater detection apparatus for detecting a target object by acquiring underwater echo signal at fixed timing intervals. The apparatus includes an operation area specification module for specifying an area used for the calculation of target-specific discrimination information.
US 2016/0306033 A1 discloses an underwater detection apparatus including a transmitter, a receiver, and a hardware processor. The hardware processor is programmed to detect an underwater target object based on at least in part on the signal received by the receiver, estimate a density index value of objects within a certain area and calculate a size index value of the underwater target object.

However, in the fish school finding device disclosed in JP 2014-077701 A, it is necessary to set the measurement area of the fish species or the measurement area of the fish length by the user manually operating the operation unit while viewing the echo image. Therefore, it is not easy to set the measurement area to an appropriate area. In addition, the positional relationship between the ship and the fish school may change over time during operation. Therefore, as time elapses, the user needs to reset the measurement area while checking the echo image at any time.

An object of the present invention is to automatically set the measurement area of the fish species or the measurement area of the fish length, or the like.

According to one aspect of the present invention there is provided a fish school finding device as defined in claim 1.

According to another aspect of the invention there is provided a computer implemented method of finding a fish school as defined in claim 12.

Preferred features of the invention are recited in the dependent claims.

According to the present invention, the measurement area of the fish species, the measurement area of the fish length or the like can be automatically set.

### BRIEF DESCRIPTION OF THE DRAWINGS

Fig. 1 is a block diagram showing a configuration of a fish school finding device according to a first embodiment.
Figs. 2A and 2B are explanatory diagrams for detecting an individual fish from an original echo.
Figs. 3A and 3B are explanatory diagrams for calculating the number of individual fish for each of a plurality of sections from the detected individual fish.
Figs. 4A and 4B are explanatory diagrams for setting a measurement area from the detected individual fish.
Figs. 5A and 5B are explanatory diagrams for setting a measurement area from the detected individual fish.
Figs. 6A and 6B are explanatory diagrams for setting a measurement area from the detected individual fish.
Fig. 7 is a flowchart showing schematic processing of a processor, a display control module, and a display unit.
Fig. 8 is a block diagram showing a configuration of a fish school finding device according to a second embodiment.
Figs. 9A and 9B are explanatory diagrams for setting a fish school distribution center depth from the original echo.
Figs. 10A and 10B are explanatory diagrams for setting a measurement area from a fish school distribution center depth.
Fig. 11 is a flowchart showing schematic processing of a processor, display control module, and a display unit.
Fig. 12 is a block diagram showing a configuration of a fish length measuring device according to a third embodiment.
Figs. 13A and 13B are explanatory diagrams of a modified example.

### DETAILED DESCRIPTION OF THE INVENTION

The configuration of the fish school finding device according to the first embodiment of the present invention will be described with reference to the drawings. Although the fish school finding device is described below as an example, the technical feature of the present application described below can be applied to other ultrasonic detecting device that transmit an ultrasonic signal and perform target object detection based on an echo signal of the ultrasonic signal. In addition, although an example in which the fish length measurement is described below, the present invention can be applied to a case in which information such as fish species discrimination.

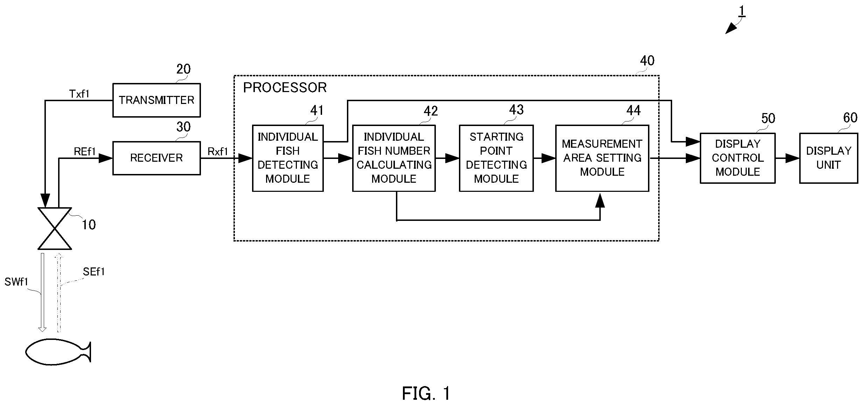

Fig. 1 is a block diagram showing a configuration of a fish school finding device according to the present embodiment.

The fish school finding device 1 includes a transducer 10, a transmitter 20, a receiver 30, a processor 40, a display control module 50, and a display unit 60. The "fish school finding device" of the present invention may include at least the processor 40.

The transmitter 20 generates an ultrasonic transmission signal having a predetermined frequency, and outputs the ultrasonic transmission signal to the transducer 10. The transmitter 20 generates, for example, an ultrasonic transmission signal of 60kHz as the frequency f1. The frequency is not limited to this, and it may be appropriately set according to the target fish species and the like. The transmitter 20 may be capable of generating ultrasonic transmission signals of a plurality of frequencies. For example, the transmitter 20 may generate ultrasonic transmission signals having different frequencies of 60kHz as the frequency f1 and 100kHz as the frequency f2.

The transmitter 20 outputs the ultrasonic transmission signals Txf1 of the frequencies f1 to the transducer 10 at predetermined intervals.

The transducer 10 includes an ultrasonic transducer element having a structure corresponding to each frequency of the ultrasonic transmission signal described above. The transducer 10 transmits ultrasonic wave SWf1 into the sea water based on the ultrasonic transmission signals Txf1 of the respective frequencies generated by the transmitter 20. The transducer 10 receives a reflected wave SEf1 generated by reflection of an ultrasonic wave SWf1 on a target such as a fish school or a sea surface by an ultrasonic transducer element, generates an echo signal REf1 for each frequency, and outputs the echo signal to the receiver 30.

The receiver 30 samples the echo signal REf1 for each PING inputted from the transceiver 10 at predetermined sampling timings, and generates a received data Rxf1. The sampling timing interval is set based on the distance resolution in the depth direction. The receiver 30 outputs the received data Rxf1 for each PING to the processor 40. The received data Rxf1 corresponds to "echo information obtained from ultrasonic waves transmitted in a depth direction at predetermined time intervals". Hereinafter, "echo information obtained from ultrasonic waves transmitted in the depth direction at predetermined time intervals" is also referred to as "original echo".

The processor 40 includes an individual fish detecting module 41, an individual fish number calculating module 42, a starting point detecting module 43, and a measurement area setting module 44. In general, the processor 40 detects an individual fish from the Rxf1, and automatically sets a measurement area based on the number of the individual fish. The processor 40 outputs the measurement area to the display control module 50. In the first embodiment, the starting point detecting module 43 corresponds to the "reference section detecting module" of the present invention.

The display control module 50 combines the image data indicating the measurement area set by the measurement area setting module 44 with the above-described received data Rxf1. The display control module 50 outputs the synthesized image data to the display unit 60. The display unit 60 is, for example, a liquid crystal display, and displays image data from the display control module 50 on a screen.

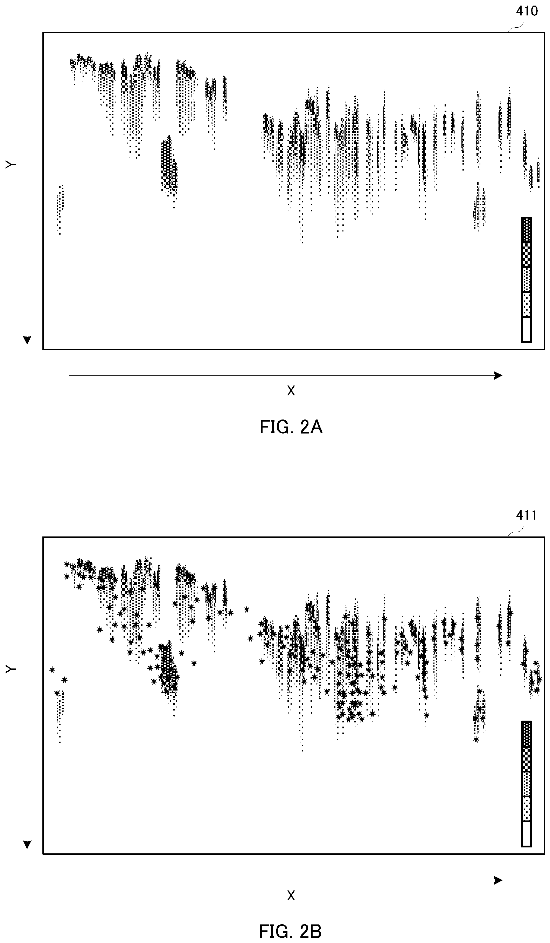

Next, a specific process performed by the processor 40 will be described with reference to Figs. 2 to 6.

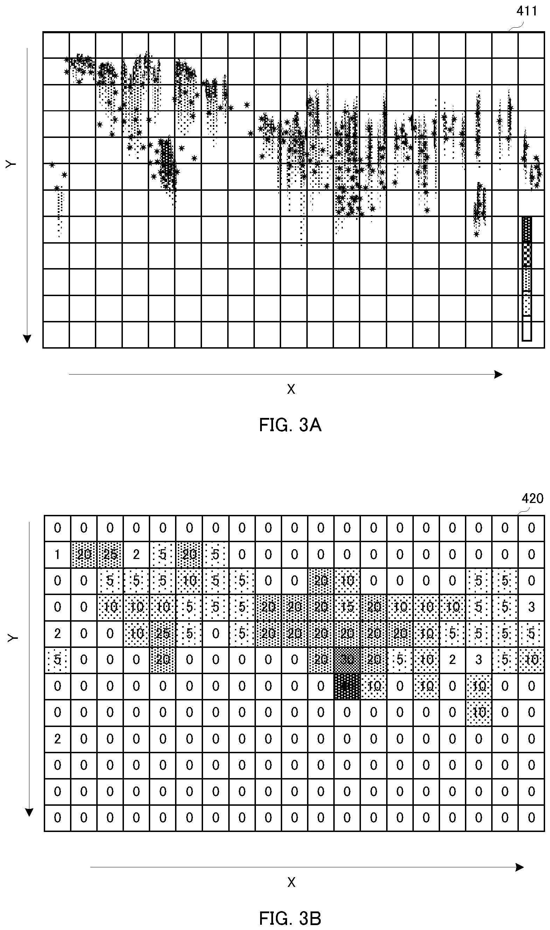

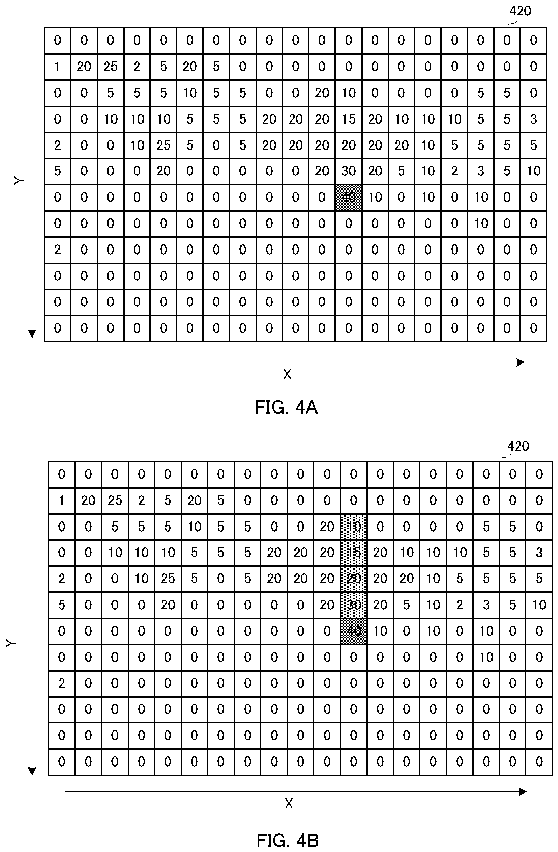

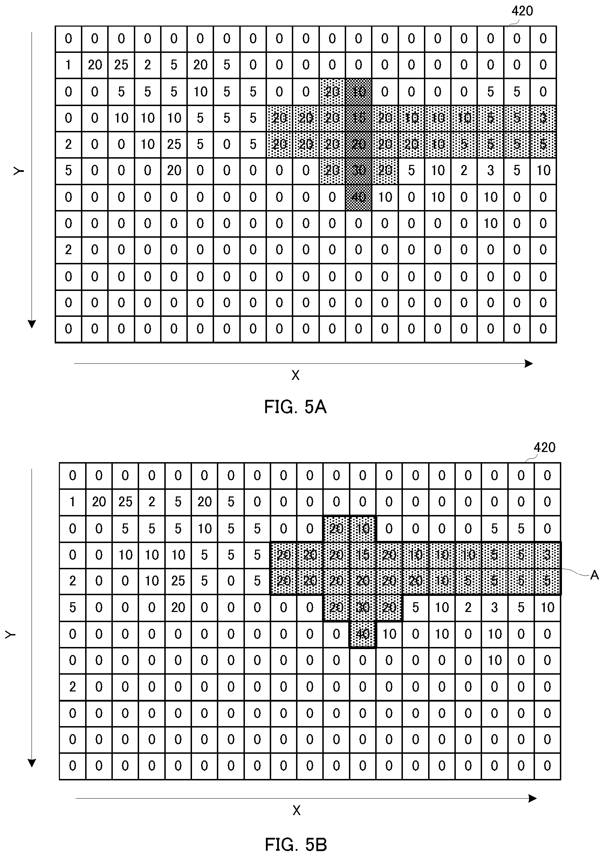

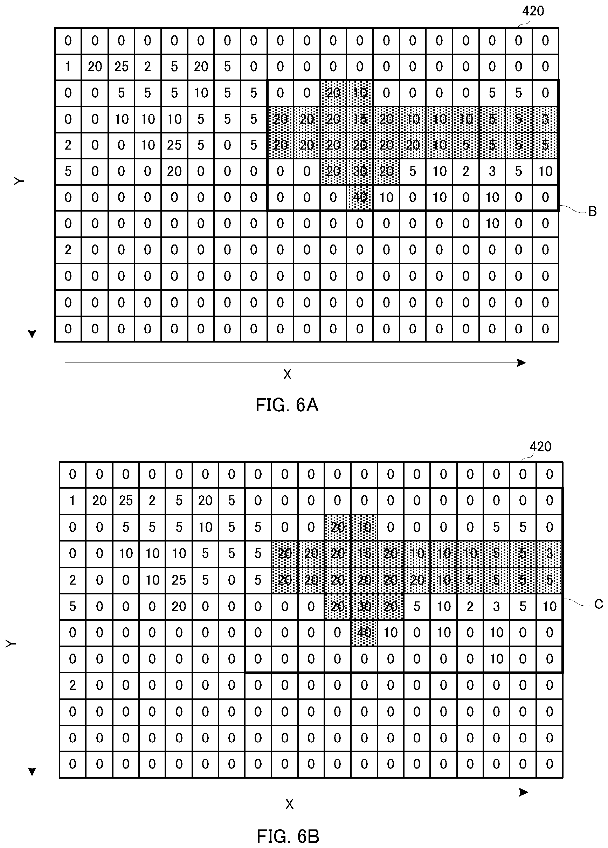

Figs. 2A and 2B are explanatory diagrams for detecting an individual fish from an original echo. Figs. 3A and 3B are explanatory diagrams for calculating the number of individual fish for each of a plurality of sections from the detected individual fish. Figs. 4A and 4B are explanatory diagrams for setting the measurement area from the detected individual fish. Figs. 5A and 5B are explanatory diagrams for setting the measurement area from the detected individual fish. Figs. 6A and 6B are explanatory diagrams for setting the measurement area from the detected individual fish.

The X direction shown in Figs. 2A and 2B are the time axis direction and shows new data in the direction shown by the arrow (right hand in the drawing). In addition, the Y direction shown in Figs. 2A and 2B are a depth direction, and indicates data at a position deeper from the sea surface in the direction shown by the arrow (downward in the drawing).

The individual fish detecting module 41 detects the individual fish by the echo signal REf1 received by the receiver 30. The individual fish detecting module 41 detects an individual fish with respect to the original data 410 composed of a two-dimensional data group in the X direction and the Y direction composed of a plurality of PING echo signal REf1.

The individual fish detecting module 41 detects, for example, a width that is greater than or equal to the amplitude threshold for detecting an object in the echo signal REf1, and if the width is less than or equal to the threshold value for determining an individual fish, determines the portion in the original data 410 as the echo of the individual fish. The simple fish detecting module 41 extracts a point determined to be an echo of the individual fish as an individual fish extraction point. In Fig. 2B, an individual fish extraction point is schematically indicated by *. In Fig. 2B, a part of the detected individual fish is indicated by *, but other points are also indicated by the detected individual fish.

The individual fish detecting module 41 outputs a composite image of the individual fish extraction points having two-dimensional distributions on the X-Y plane extracted by the individual fish detecting module 41 and the received data Rxf1 to the display control module 50. The display control module 50 may display the composite image on the display unit 60. The individual fish detecting module 41 generates the individual fish number detecting data 411 from the individual fish extracting point and the received data Rxf1.

As shown in Fig. 3A, the individual fish number calculating module 42 divides the individual fish number detecting data 411 into a plurality of sections. The plurality of sections has a lattice shape divided by straight lines parallel to the X direction and the Y direction. The individual fish number calculating module 42 calculates the number of individual fish detected for each of the plurality of sections. For example, the individual fish number calculating module 42 divides the individual fish number detecting data 411 for each 100 pixels with respect to the X direction. For example, the individual fish number calculating module 42 divides the individual fish number detecting data 411 into a plurality of equal divisions of the whole area of the depth in the Y direction. The width of the section can be appropriately changed according to the use state.

As a result, the individual fish number calculating module 42 generates individual fish number mapping data 420 as shown in Fig. 3B. The individual fish number mapping data 420 is data in which the number of individual fish detected in each section is set.

The individual fish number calculating module 42 may output the individual fish number mapping data 420 to the display control module 50, and the display control module 50 may display the individual fish number mapping data 420 on the display unit 60. At this time, as shown in Fig. 3B, the individual fish number calculating module 42 may assign a color that makes the section itself darker as the number of detected individual fish per section increases. This makes it easier to grasp the two-dimensional distribution of the individual fish detected visually. For example, in the section displayed in the darkest color positioned slightly to the right from the central of Fig. 3B, the number of individual fish is 40, and the number of individual fish is the largest in the individual fish number mapping data 420.

The starting point detecting module 43 detects a section having the largest individual fish number in the individual fish number mapping data 420 as a starting point. In the first embodiment, the starting point corresponds to the "reference section" of the present invention. In the example of Figs. 3B and 4A, the starting point is a section in which the number of individual fish is 40. It should be noted that the starting point is not limited to the section having the largest individual fish number in the individual fish number mapping data 420, and the section having the individual fish number equal to or larger than a predetermined threshold may be detected as the starting point.

The measurement area setting module 44 determines the continuity of the depth direction (Y direction) and the time axis direction (X direction) based on the individual fish number mapping data 420, that is, the individual fish number of each of a plurality of sections.

As shown in Fig. 4B, the determination of the continuity is performed based on the number of individual fishes in the adjacent sections in order from the starting point in the shallow direction (the -Y direction) along the Y direction or in the deep direction (the Y direction). For example, the measurement area setting module 44 compares the number of individual fish that is 30 in the section adjacent to the starting point in the -Y direction with the number of individual fish that is 40 in the starting point.

The measurement area setting module 44 determines that adjacent sections have the continuity each other when the number of individual fish in adjacent sections is within a predetermined range each other (Condition 1), and the number of individual fish calculated for each sections are equal to or greater than a predetermined threshold number (Condition 2). The predetermined range is, for example, 50% or more and 200% or less of each other. The predetermined threshold number is, for example, 3 or more. In this case, if the ratio between the number of individual fish in the section of the starting point and the number of individual fish in the section adjacent to the starting point are 50% or more and 200% or less each other, and the number of individual fish in the section of the starting point and the number of individual fish in the section adjacent to the starting point are 3 or more, the measurement area setting module 44 determines that the section of the starting point and the section adjacent to the starting point have the continuity.

Using the same conditions, the measurement area setting module 44 determines the continuity of adjacent sections in order from the starting point along the Y direction in the shallow direction (-Y direction) or in the deep direction (Y direction). It should be noted that it is also possible to determine the continuity by only one of Condition 1 and Condition 2. However, determining the continuity in Conditions 1 and Condition 2 can improve the accuracy of the determination.

The measurement area setting module 44 may terminate the determination in one direction along the Y direction in the section determined not to have continuity. As a result, unnecessary assessment of a section having no continuity is omitted, and the time required for determination is shortened. In addition, the measurement area setting module 44 may determine the continuity within a range of a predetermined number of sections from the starting point. For example, there is a case in which the fifth section is determined from the starting point by counting. Thereby, it is possible to quickly determine only the range determined in advance from the starting point.

By this processing, as shown in the hatched section in Fig. 4B, an area having continuity in the Y direction can be detected.

Next, as shown in Fig. 5A, the measurement area setting module 44 determines the continuity of the section in the X direction (time axis direction). Similar to the determination of the continuity in the depth direction, the measurement area setting module 44 determines the continuity of the sections based on the number of individual fish in the sections adjacent to each other in the right direction (the newer of the time) or the left direction (the older of the time) along the X direction in order from the sections determined to have continuity.

By this processing, as shown in the hatched section in Fig. 5A, an area having continuity in the X direction can be detected. As a result, the continuity of the section along the Y direction and the X direction from the starting point can be determined. In the present embodiment, the continuity in the X direction is judged after the continuity in the Y direction is judged, but the continuity may be judged from any direction.

The measurement area setting module 44 sets the measurement area based on the continuity of the Y direction (depth direction) and the X direction (time axis direction) from the section of the starting point described above. As a result, the user automatically sets the measurement area without setting the measurement area by him/her. Fig. 5B, 6A, and 6B are examples of measurement areas, respectively.

In the case of Fig. 5B, the measurement area setting module 44 sets sections determined to have continuity in the Y direction and the X direction (hereinafter, referred to as an area A) as a measurement area. Thereby, since only the section satisfying the condition of the measurement area is set as the measurement area, a more accurate measurement value can be obtained. It is also possible to use the area A as a fish school for analysis.

In the case of Fig. 6A, the measurement area setting module 44 sets the area B as the measurement area. The area B is a measurement area of a rectangle defined by the area A. The area B corresponds to the area of the first rectangle in the present invention. That is, the area B is a rectangle having one side in the Y direction from the deepest section to the shallowest section in the Y direction in the area A, and one side in the X direction from the newest section to the oldest section in the X direction in the area A. As a result, since the measurement area is set as a rectangle, it is possible to omit the labor of finely processing the measurement in the Y direction and the X direction.

In the case of Fig. 6B, the measurement area setting module 44 sets the area C as the measurement area. The area C is a rectangle surrounding the area B. The area C corresponds to the area of the second rectangle in the present invention. For example, area C may be an area expanded one section each of the Y direction and the X direction from the area B.

Since the new side (right side) of the area B in the X direction is the latest section, the right end of the area B and the right end of the area C may be the same. As a result, since the measurement area is set as a rectangle, it is possible to omit the labor of finely processing the measurement in the Y direction and the X direction. In addition, since the measurement area can be set with a margin, the number of samples effective for measurement can be more effectively acquired for post-processing using the measurement area such as fish length measurement.

In the above description, an example has been described in which processing is executed by a plurality of functional parts of the processor 40 in order to automatically set the measurement area, but this processing may be programmed and stored, and the program of the processing may be read and executed by an calculation device such as a computer.

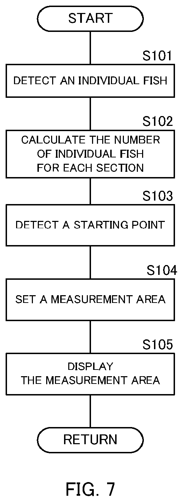

In this case, the setting process may be performed according to the following flowchart. Fig. 7 is a flowchart showing processing for setting a measurement area.

The calculation device performs a process of setting the measurement areas according to the flow schematically shown in the S101-S104 of Fig. 7.

The calculation device detects an individual fish from the received data (original echo) (S101 in Fig. 7).

The calculation device calculates the number of individual fish for each section of the individual fish number detecting data composed of the X-Y two-dimensional distributions of the detected individual fish (Fig. 7:S102).

The calculation device detects a starting point based on the calculated number of individual fish per section (S103 in Fig. 7).

The calculation device sets a measurement area based on the detected starting point (S104 in Fig. 7).

The calculation device displays the measurement area superimposed on the received data (original echo) (S105 in Fig. 7).

As a result, the fish school finding device 1 can automatically provide the measurement area of the fish school from the received data (original echo), to an operator such as a fisherman.

Hereinafter, the configuration of the fish school finding device according to the second embodiment of the present invention will be described with reference to the drawings. In the description of the second embodiment of the present invention, the description of the same configuration as that of the first embodiment of the present invention is omitted, and only different points will be described.

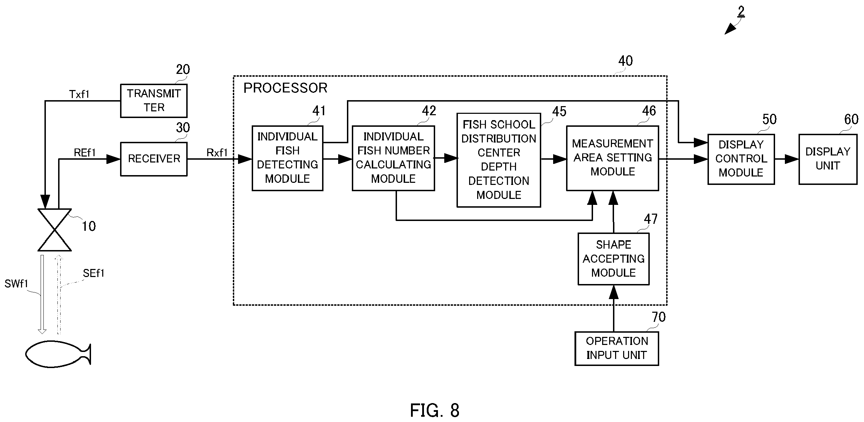

Fig. 8 is a block diagram showing a configuration of a fish school finding device according to the second embodiment.

The fish school finding device 2 includes a shape accepting module 47 and an operation input unit 70 in addition to the configuration of the fish school finding device 1. The fish school finding device 2 includes a fish school distribution center depth detecting module 45 instead of the starting point detecting module 43 of the fish school finding device 1. In the second embodiment, the fish school distribution center depth detecting module 45 corresponds to the "reference section detecting module" of the present invention.

The operation input unit 70 is used by the user to input, to the processor 40, an external shape that forms a measurement area. The operation input unit 70 may be, for example, a mouse, a keyboard, or the like connected to the processor 40.

The shape accepting module 47 accepts the setting of the outer shape of the measurement area input from the operation input unit 70. The shape accepting module 47 inputs data of the outer shape to the measurement area setting module 46. The data of the external shape is a dimension (PING number) in the X direction and a dimension (depth range) in the Y direction.

The measurement area setting module 46 sets an actual measurement area in accordance with the input data of the outer shape. The shape accepting module 47 may extract and set the outer shape from the manual measurement area input by the user.

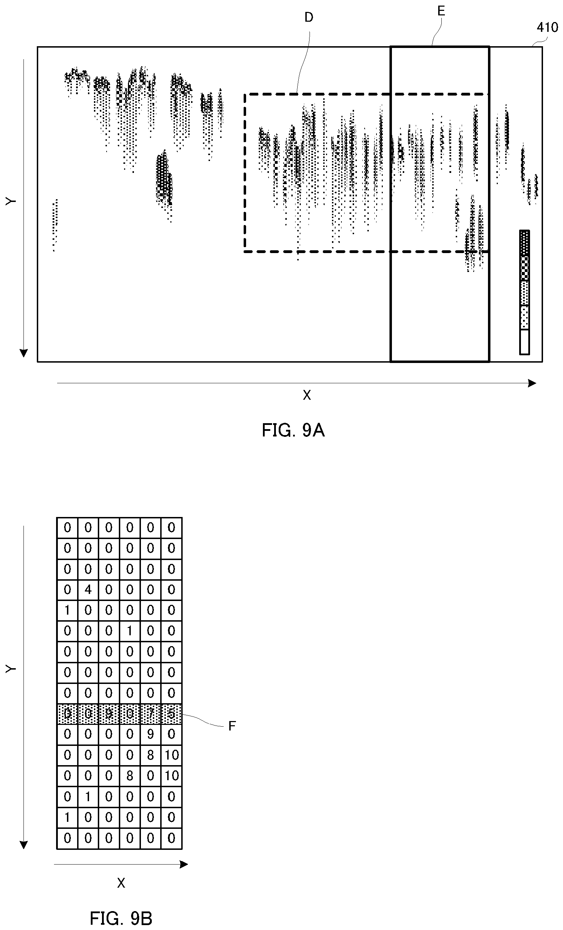

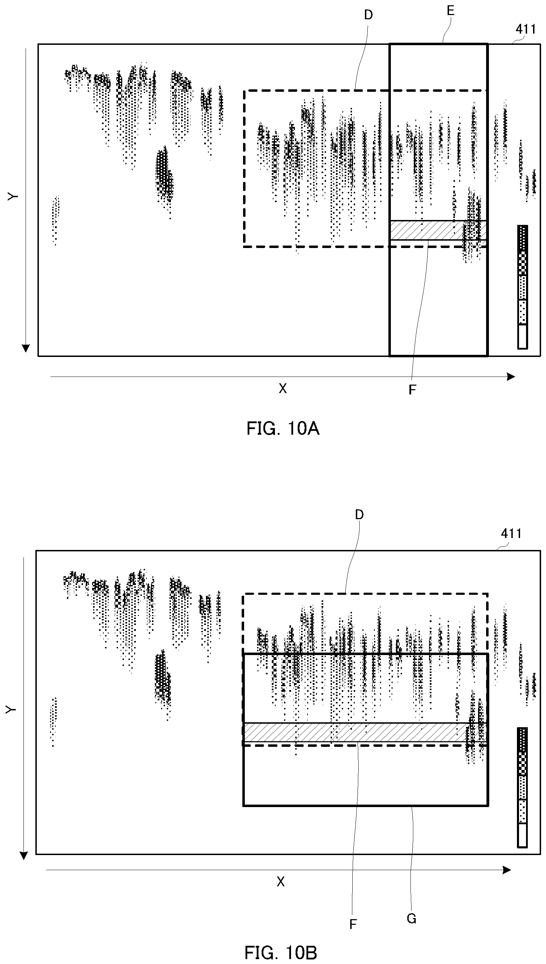

Next, a specific process performed by the processor 40 in the fish school finding device 2 will be described with reference to Figs. 9A and 9B, and Figs. 10A and 10B.

Figs. 9A and 9B are explanatory diagrams for setting the fish school distribution center depth from the original echo. Figs. 10A and 10B are explanatory diagrams for setting the measurement area from the fish school distribution center depth.

As shown in Fig. 9A, the display control module 50 outputs the received data Rxfl, which is the original echo, to the display unit 60. The display control module 50 outputs the outer shape D, which forms the measurement area input to the measurement area setting module 46 via the shape accepting module 47, to the display unit 60. In the present embodiment, the outer shape D is a rectangle, but can be appropriately changed according to the use situation.

The individual fish detecting module 41 analyzes a predetermined area in the X-axis direction among the outer shape D in the original data 410 consist of the REf1. That is, the individual fish detecting module 41 extracts the detected individual fish in the predetermined area E shown in Fig. 9A same as the fish school finding device 1.

It is preferable that the predetermined area E is in contact with the right end in the X-axis direction of the outer shape D, that is, the end having the newer time. As a result, a new data group can be used out of the outer shape D which is the area set by the user, and the deviation between the ship and the fish school due to the movement of the ship or the elapse of time can be reduced.

As shown in Fig. 9B, the individual fish number calculating module 42 calculates the detected individual fish in the predetermined area E for each section. The fish school distribution center depth detecting module 45 totals the sum of the number of individual fish calculated by the individual fish number calculating module 42 for each row of the section arranged in the X-axis direction. That is, the fish school distribution center depth detecting module 45 totals the sum total of the number of individual fish in a plurality of PING sections for each row in the depth directions.

The fish school distribution center depth detecting module 45 detects the row of the section which has the largest number of individual fish as the fish school distribution center depth. For example, the row of the section to which the dark color is added shown in Fig. 9B is detected as the fish school distribution center depth F. In the second embodiment, the fish school distribution center depth F corresponds to the "reference section" of the present invention.

As shown in Fig. 10A, the display control module 50 may output the fish school distribution center depth F in the predetermined area E to the display unit 60. Thus, the user can grasp the depth at which the largest number of individual fish is detected out of the fish school in the predetermined area E.

As shown in Fig. 10B, the measurement area setting module 46 moves the outer shape D to the measurement area G. At this time, the measurement area setting module 46 sets the center in the depth direction of the outer shape D coincide with the center in the depth direction detected by the fish school distribution center depth detecting module 45. That is, the measurement area setting module 46 sets the measurement area G so that the center in the depth direction in the outer shape D coincides with the fish school distribution center depth F. As a result, the actual measurement area can be automatically set so that the point where the largest number of individual fish is detected becomes the central of the measurement area.

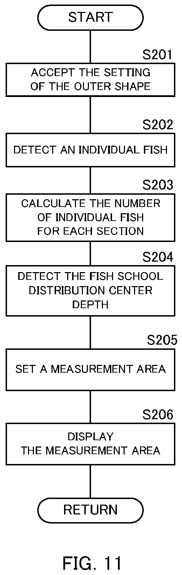

Also in the fish school finding device 2, in order to automatically set the measurement area in the same manner as in the fish school finding device 1, each process may be programmed and stored, and the program of the process may be read out and executed by a calculation device such as a computer. Fig. 11 is a flowchart showing an outline process of setting the measurement area.

The calculation device performs a process of setting the measurement areas according to the flow schematically shown in the S201-S205 of Fig. 2.

The calculation device accepts the setting of the outer shape (Fig. 11:S201).

The calculation device detects an individual fish from the received data (original echo) (S202 in Fig. 11).

The calculation device calculates the number of individual fish for each section out of the individual fish number detecting data composed of the X-Y two-dimensional distributions of the detected individual fish (Fig. 11:S203).

The calculation device detects the fish school distribution center depth based on the calculated individual fish number for each section (Fig. 11:S204).

The calculation device sets the measurement area based on the detected fish school distribution center depth (Fig. 11:S205).

The calculation device displays the measurement area on the display screen in a state in which the measurement area is superimposed on the received data (original echo) (Fig. 11:S206).

This makes it possible to automatically provide the operator such as a fisherman with the measurement area of the fish school from the received data (original echo).

Hereinafter, a configuration of a fish length measuring device according to a third embodiment of the present invention will be described with reference to the drawings. In the description of the third embodiment of the present invention, the description of the same configuration as that of the first embodiment of the present invention is omitted, and only different points will be described.

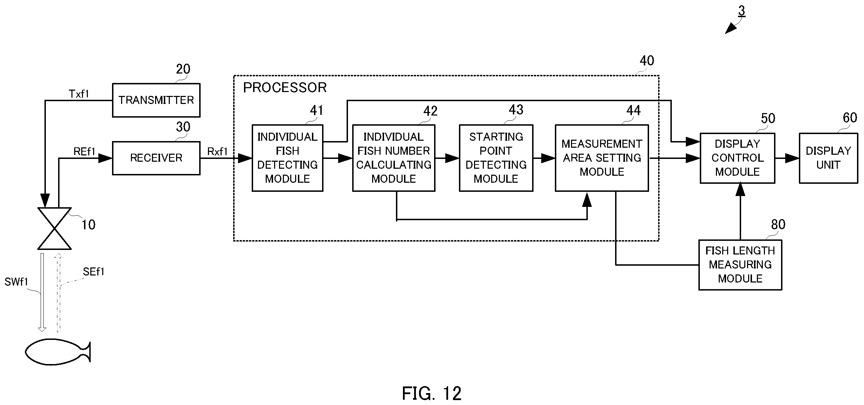

Fig. 12 is a block diagram showing a configuration of the fish length measuring device 3 according to the third embodiment.

The fish length measuring device 3 of the present embodiment includes a fish length measuring module 80 in addition to the configuration of the fish school finding device 1.

The fish length measuring module 80 measures the fish length of the individual fish included in the fish school by a known method. In the fish length measuring device 3, the fish length of the individual fish included in the measurement area set by the measurement area setting module 44 is measured. Although not shown, the display control module 50 may display the obtained fish length measurement data on the screen by superimposing the fish length measurement data on the received data (original echo).

As a result, it is possible to automatically set the measurement area of the fish school from the received data (original echo) and to measure and provide the fish length of the individual fish included in the measurement area to an operator such as a fisherman.

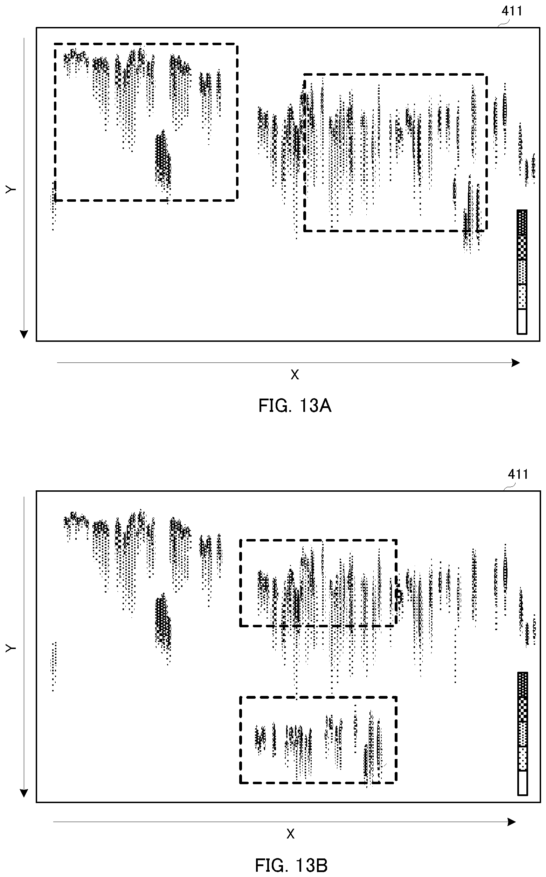

Although the measurement area setting module 44 or the measurement area setting module 46 sets only one measurement area on the original data in the above description, the measurement area setting module 44 or the measurement area setting module 46 may set a plurality of measurement areas. Figs. 13A and 13B are explanatory diagrams of a modified example.

For example, as shown in Fig. 13A, two measurement areas may be set in the X-axis direction (time axis direction). As a result, even when there is a plurality of fish school different from each other in the moving direction of the ship, the fish school can be detected without leaking.

As shown in Fig. 13B, two measurement areas may be set in the Y-axis direction (depth direction). As a result, even when there is a plurality of fish school having different depths, the fish school can be detected without leaking.

### DESCRIPTION OF REFERENCE CHARACTERS

- 1, 2, 3:: Fish School Finding Device
- 10:: Transducer
- 20:: Transmitter
- 30:: Receiver
- 40:: Processor
- 41:: Individual Fish Detecting Module
- 42:: Individual Fish Number Calculating Module
- 43:: Starting Point Detecting Module (Reference Section Detecting Module)
- 44:: Measurement Area Setting Module
- 45:: Fish School Distribution Center Depth Detecting Module (Reference Section Detecting Module)
- 46:: Measurement Area Setting Module
- 47:: Shape Accepting Module

## Claims

1. A fish school finding device (1, 2), comprising:
an individual fish detecting module (41) configured to detect an individual fish from echo information obtained from ultrasonic waves transmitted in a depth direction at predetermined time intervals;
a reference section detecting module (43, 45) configured to detect a reference section; and
a measurement area setting module (44, 46) configured to set a measurement area based on the reference section,
**characterized in that**:
the device comprises an individual fish number calculating module (42) configured to calculate a number of the individual fish for each of a plurality of two-dimensionally arrayed sections consisting of the depth direction and a time axis direction;
the reference section detecting module (43, 45) is configured to detect the reference section based on the number of the individual fish; and
the measurement area setting module (44, 46) determines that adjacent sections have a continuity with each other in case that the number of individual fish calculated for each section is within a predetermined range of each other, and the number of individual fish calculated for each section is equal to or greater than a predetermined threshold number.

2. The fish school finding device (1, 2) according to claim 1, wherein the reference section detecting module (43) detects a section having a maximum number of individual fish as the reference section.

3. The fish school finding device (1, 2) according to claim 1 or 2, wherein the measurement area setting module (44, 46) sets the measurement area based on a continuity of the plurality of two-dimensionally arrayed sections from the reference section.

4. The fish school finding device (1, 2) according to any one of claims 1 to 3, wherein the measurement area setting module (44, 46) sets sections having a continuity in the depth direction and the time axis direction as the measurement area.

5. The fish school finding device (1, 2) according to any one of claims 1 to 3, wherein the measurement area setting module (44, 46) sets a rectangle defined by an area having a continuity in the depth direction and the time axis direction as the measurement area.

6. The fish school finding device (1, 2) according to any one of claims 1 to 3, wherein the measurement area setting module (44, 46) sets a rectangle surrounding an area having a continuity in the depth direction and the time axis direction as the measurement area.

7. The fish school finding device (1, 2) according to any one of claims 1 to 6, wherein the measurement area setting module (44, 46) determines a continuity from the reference section within a predetermined number of sections.

8. The fish school finding device (1, 2) according to any one of claim 1 to 7, further comprising a shape accepting module (47) configured to accept setting of an external shape of the measurement area,
wherein the measurement area setting module (44, 46) sets a center in a depth direction of the external shape to coincide with a depth of the reference section.

9. The fish school finding device (1, 2) according to claim 8, wherein the measurement area setting module (44, 46) sets the center in the depth direction of the external shape to coincide with the depth of the reference section at the latest position on the time axis direction of the external shape.

10. The fish school finding device (1, 2) according to any one of claims 1 to 9, wherein the measurement area setting module (44, 46) sets a plurality of measurement areas.

11. A fish length measuring device (3) including a fish length measuring module (80) configured to measure a fish length included in the measurement area, using the fish school finding device (1, 2) according to any one of claims 1 to 10.

12. A computer implemented fish school finding method, comprising:
detecting an individual fish from echo information obtained from ultrasonic waves transmitted in a depth direction at predetermined time intervals;
detecting a reference section; and
setting a measurement area based on the reference section,
**characterized in that**:
a number of the individual fish is calculated for each of a plurality of two-dimensionally arrayed sections consisting of the depth direction and a time axis direction;
the reference section is detected based on the number of the individual fish; and
the measurement area is set by determining that adjacent sections have a continuity with each other in case that the number of individual fish calculated for each section is within a predetermined range of each other, and the number of individual fish calculated for each section is equal to or greater than a predetermined threshold number.

13. A computer program comprising instructions which, when the program is executed by a computer, cause the computer to carry out the method of claim 12.

## Patentansprüche

1. Fischschwarmortungsgerät (1, 2), das Folgendes umfasst:
ein Einzelfischerkennungsmodul (41), das zum Erkennen eines einzelnen Fischs anhand von Echoinformationen konfiguriert ist, die von in vorbestimmten Zeitintervallen in einer Tiefenrichtung übertragenen Ultraschallwellen erhalten werden;
ein Referenzabschnitterkennungsmodul (43, 45), das zum Erkennen eines Referenzabschnitts konfiguriert ist; und
ein Messbereichseinstellmodul (44, 46), das zum Einstellen eines Messbereichs auf der Basis des Referenzabschnitts konfiguriert ist,
**dadurch gekennzeichnet, dass**:
das Gerät ein Einzelfischzahlberechnungsmodul (42) umfasst, das zum Berechnen einer Anzahl der einzelnen Fische für jeden von mehreren zweidimensional angeordneten Abschnitten bestehend aus der Tiefenrichtung und einer Zeitachsenrichtung konfiguriert ist;
das Referenzabschnitterkennungsmodul (43, 45) zum Erkennen des Referenzabschnitts auf der Basis der Anzahl der einzelnen Fische konfiguriert ist; und
das Messbereichseinstellmodul (44, 46) ermittelt, dass benachbarte Abschnitte eine Kontinuität miteinander haben, falls die für jeden Abschnitt berechnete Anzahl von einzelnen Fischen innerhalb eines vorbestimmten Bereichs voneinander liegt und die für jeden Abschnitt berechnete Anzahl von einzelnen Fischen gleich einer oder größer als eine vorbestimmte Schwellenzahl ist.

2. Fischschwarmortungsgerät (1, 2) nach Anspruch 1, wobei das Referenzabschnitterkennungsmodul (43) einen Abschnitt mit einer maximalen Anzahl von einzelnen Fischen als Referenzabschnitt erkennt.

3. Fischschwarmortungsgerät (1, 2) nach Anspruch 1 oder 2, wobei das Messbereichseinstellmodul (44, 46) den Messbereich auf der Basis einer Kontinuität der mehreren zweidimensional angeordneten Abschnitte vom Referenzabschnitt einstellt.

4. Fischschwarmortungsgerät (1, 2) nach einem der Ansprüche 1 bis 3, wobei das Messbereichseinstellmodul (44, 46) Abschnitte mit einer Kontinuität in der Tiefenrichtung und der Zeitachsenrichtung als Messbereich einstellt.

5. Fischschwarmortungsgerät (1, 2) nach einem der Ansprüche 1 bis 3, wobei das Messbereichseinstellmodul (44, 46) ein durch einen Bereich mit einer Kontinuität in der Tiefenrichtung und der Zeitachsenrichtung definiertes Rechteck als Messbereich einstellt.

6. Fischschwarmortungsgerät (1, 2) nach einem der Ansprüche 1 bis 3, wobei das Messbereichseinstellmodul (44, 46) ein einen Bereich mit einer Kontinuität in der Tiefenrichtung und der Zeitachsenrichtung umgebendes Rechteck als Messbereich einstellt.

7. Fischschwarmortungsgerät (1, 2) nach einem der Ansprüche 1 bis 6, wobei das Messbereichseinstellmodul (44, 46) eine Kontinuität vom Referenzabschnitt innerhalb einer vorbestimmten Anzahl von Abschnitten bestimmt.

8. Fischschwarmortungsgerät (1, 2) nach einem der Ansprüche 1 bis 7, das ferner ein Formannahmemodul (47) umfasst, das so konfiguriert ist, dass es die Einstellung einer äußeren Form des Messbereichs annimmt,
wobei das Messbereichseinstellmodul (44, 46) einen Mittelpunkt in einer Tiefenrichtung der äußeren Form so einstellt, dass er mit einer Tiefe des Referenzabschnitts übereinstimmt.

9. Fischschwarmortungsgerät (1, 2) nach Anspruch 8, wobei das Messbereichseinstellmodul (44, 46) den Mittelpunkt in der Tiefenrichtung der äußeren Form so einstellt, dass er mit der Tiefe des Referenzabschnitts an der letzten Position auf der Zeitachsenrichtung der äußeren Form übereinstimmt.

10. Fischschwarmortungsgerät (1, 2) nach einem der Ansprüche 1 bis 9, wobei das Messbereichseinstellmodul (44, 46) mehrere Messbereiche einstellt.

11. Fischlängenmessgerät (3) mit einem Fischlängenmessmodul (80), das zum Messen einer in dem Messbereich enthaltenen Fischlänge unter Verwendung von dem Fischschwarmortungsgerät (1, 2) nach einem der Ansprüche 1 bis 10 konfiguriert ist.

12. Computerimplementiertes Fischschwarmortungsverfahren, das Folgendes beinhaltet:
Erkennen eines einzelnen Fischs anhand von Echoinformationen, die von in einer Tiefenrichtung in vorbestimmten Zeitintervallen übertragenen Ultraschallwellen erhalten werden;
Erkennen eines Referenzabschnitts; und
Einstellen eines Messbereichs auf der Basis des Referenzabschnitts,
**dadurch gekennzeichnet, dass**:
eine Anzahl der einzelnen Fische für jeden von mehreren zweidimensional angeordneten Abschnitten bestehend aus der Tiefenrichtung und einer Zeitachsenrichtung berechnet wird;
der Referenzabschnitt auf der Basis der Anzahl der einzelnen Fische erkannt wird; und
der Messbereich eingestellt wird durch Ermitteln, dass benachbarte Abschnitte eine Kontinuität miteinander haben, falls die für jeden Abschnitt berechnete Anzahl von einzelnen Fischen innerhalb eines vorbestimmten Bereichs voneinander liegt, und die für jeden Abschnitt berechnete Anzahl von einzelnen Fischen gleich einer oder größer als eine vorbestimmte Schwellenzahl ist.

13. Computerprogramm mit Befehlen, die bei Ausführung des Programms durch einen Computer bewirken, dass der Computer das Verfahren nach Anspruch 12 durchführt.

## Revendications

1. Dispositif de recherche de banc de poissons (1, 2), comprenant :
un module de détection de poisson individuel (41) configuré pour détecter un poisson individuel à partir d'informations d'écho obtenues à partir d'ondes ultrasonores transmises dans un sens d'une profondeur à des intervalles de temps prédéterminés ;
un module de détection de section de référence (43, 45) configuré pour détecter une section de référence ; et
un module de définition de zone de mesure (44, 46) configuré pour définir une zone de mesure sur la base de la section de référence,
le dispositif étant **caractérisé en ce que** :
le dispositif comprend un module de calcul de nombre de poissons individuels (42) configuré pour calculer un nombre des poissons individuels pour chaque section d'une pluralité de sections en réseau bidimensionnel constituées du sens de la profondeur et d'un sens d'un axe temporel ;
le module de détection de section de référence (43, 45) est configuré pour détecter la section de référence sur la base du nombre des poissons individuels ; et
le module de définition de zone de mesure (44, 46) détermine que des sections adjacentes ont une continuité entre elles si le nombre de poissons individuels calculé pour chaque section se situe dans une fourchette prédéterminée les unes par rapport aux autres et si le nombre de poissons individuels calculé pour chaque section est supérieur ou égal à un nombre seuil prédéterminé.

2. Dispositif de recherche de banc de poissons (1, 2) selon la revendication 1, dans lequel le module de détection de section de référence (43) détecte en tant que section de référence une section ayant un nombre maximum de poissons individuels.

3. Dispositif de détection de banc de poissons (1, 2) selon la revendication 1 ou 2, dans lequel le module de définition de zone de mesure (44, 46) définit la zone de mesure sur la base d'une continuité de la pluralité de sections en réseau bidimensionnel par rapport à la section de référence.

4. Dispositif de recherche de banc de poissons (1, 2) selon l'une quelconque des revendications 1 à 3, dans lequel le module de définition de zone de mesure (44, 46) définit en tant que zone de mesure des sections ayant une continuité dans le sens de la profondeur et dans le sens de l'axe temporel.

5. Dispositif de recherche de banc de poissons (1, 2) selon l'une quelconque des revendications 1 à 3, dans lequel le module de définition de zone de mesure (44, 46) définit en tant que zone de mesure un rectangle défini par une zone ayant une continuité dans le sens de la profondeur et dans le sens de l'axe temporel.

6. Dispositif de recherche de banc de poissons (1, 2) selon l'une quelconque des revendications 1 à 3, dans lequel le module de définition de zone de mesure (44, 46) définit en tant que zone de mesure un rectangle entourant une zone ayant une continuité dans le sens de la profondeur et dans le sens de l'axe temporel.

7. Dispositif de recherche de banc de poissons (1, 2) selon l'une quelconque des revendications 1 à 6, dans lequel le module de définition de zone de mesure (44, 46) détermine une continuité par rapport à la section de référence dans un nombre prédéterminé de sections.

8. Dispositif de recherche de banc de poissons (1, 2) selon l'une quelconque des revendications 1 à 7, comprenant en outre un module d'acceptation de forme (47) configuré pour accepter la définition d'une forme externe de la zone de mesure,
le module de définition de zone de mesure (44, 46) définissant un centre dans un sens d'une profondeur de la forme externe pour qu'il coïncide avec une profondeur de la section de référence.

9. Dispositif de recherche de banc de poissons (1, 2) selon la revendication 8, dans lequel le module de définition de zone de mesure (44, 46) définit le centre dans le sens de la profondeur de la forme externe pour qu'il coïncide avec la profondeur de la section de référence à la dernière position sur le sens de l'axe temporel de la forme externe.

10. Dispositif de recherche de banc de poissons (1, 2) selon l'une quelconque des revendications 1 à 9, dans lequel le module de définition de zone de mesure (44, 46) définit une pluralité de zones de mesure.

11. Dispositif de mesure de longueur de poisson (3) comprenant un module de mesure de longueur de poisson (80) configuré pour mesurer une longueur d'un poisson compris dans la zone de mesure, au moyen du dispositif de recherche de banc de poissons (1, 2) selon l'une quelconque des revendications 1 à 10.

12. Procédé de recherche de banc de poissons mis en oeuvre par ordinateur, comprenant les étapes consistant à :
détecter un poisson individuel à partir d'informations d'écho obtenues à partir d'ondes ultrasonores transmises dans un sens d'une profondeur à des intervalles de temps prédéterminés ;
détecter une section de référence ; et
définir une zone de mesure sur la base de la section de référence,
le procédé étant **caractérisé en ce que** :
un nombre des poissons individuels est calculé pour chaque section d'une pluralité de sections en réseau bidimensionnel constituées du sens de la profondeur et d'un sens d'un axe temporel ;
la section de référence est détectée sur la base du nombre des poissons individuels ; et
la zone de mesure est définie en déterminant que des sections adjacentes ont une continuité entre elles si le nombre de poissons individuels calculé pour chaque section se situe dans une fourchette prédéterminée les unes par rapport aux autres et si le nombre de poissons individuels calculé pour chaque section est supérieur ou égal à un nombre seuil prédéterminé.

13. Programme informatique comprenant des instructions qui, lorsque le programme est exécuté par un ordinateur, amènent l'ordinateur à réaliser le procédé selon la revendication 12.
